# EUROPÄISCHE PATENTSCHRIFT

(11) **EP 3 136 866 B1**
(45) Veröffentlichungstag und Bekanntmachung des Hinweises auf die Patenterteilung: **24.02.2021**
(21) Anmeldenummer: 15721166.5
(22) Anmeldetag: 28.04.2015
(51) Int. Cl.: A21B 5/02

(54) **BACKOFEN MIT BACKZANGENKETTE**
BAKING OVEN WITH BAKING MOULDS CHAIN
FOUR DE CUISSON AVEC CHAÎNE DE MOULES DE CUISSON

(30) Priorität: 29.04.2014 AT 3102014
(43) Veröffentlichungstag der Anmeldung: 08.03.2017
(73) Patentinhaber: Haas Food Equipment GmbH, 1210 Wien (AT)
(72) Erfinder: BIBARIC, Markus, A-3400 Kierling (AT); BUCZOLITS, Peter, A-2000 Stockerau (AT); HAAS, Johannes, A-1040 Wien (AT); HAAS, Josef, A-2100 Leobendorf (AT); JIRASCHEK, Stefan, A-2202 Königsbrunn (AT); KNIRSCH, Karl, A-1100 Wien (AT); SCHELLER, Markus, A-2004 Bruderndorf (AT); SCHUCK, Michael, A-2000 Stockerau (AT)
(74) Vertreter: Puchberger & Partner Patentanwälte
(86) Internationale Anmeldenummer: PCT/EP2015/059133
(87) Internationale Veröffentlichungsnummer: WO 2015/165868

(56) Entgegenhaltungen:
- WO-A1-2008/003869
- DE-A1- 3 217 502
- DE-A1- 3 319 886
- DE-A1-102011 054 018
- US-A- 2 819 691
- US-A- 5 787 800
- US-A- 5 906 485
- US-A1- 2012 121 771

## Beschreibung

Die Erfindung betrifft einen Backofen zum Herstellen gebackener, bevorzugt essbarer, Produkte, umfassend: einen Backraum, mit einem unteren Backbereich und einem oberhalb des unteren Backbereichs angeordneten oberen Backbereich, eine Backzangenkette, die kontinuierlich umlaufend entlang einer oberen Transportebene durch den oberen Backbereich und entlang einer unteren Transportebene durch den unteren Backbereich bewegt ist und die auf- und zuklappbare Backzangen enthält, wobei die Backzangen je eine Oberplattenanordnung und eine Unterplattenanordnung umfassen, zwischen denen in zugeklappter Stellung eine Backform für die Backprodukte gebildet ist, wobei die Oberplattenanordnung und die Unterplattenanordnung jeweils an ihrer der Backform abgewandten Seite eine Rückenfläche aufweisen, die jeweils über einen Wärme leitenden und speichernden Basiskörper mit der Backform verbunden sind und wobei die Backzangen beim Übergang von der oberen Transportebene auf die untere Transportebene umgedreht werden, sodass die in der oberen Transportebene oberhalb der Unterplattenanordnung angeordnete Oberplattenanordnung in der unteren Transportebene unterhalb der Unterplattenanordnung angeordnet ist.

Backöfen zum Herstellen gebackener Produkte, insbesondere Backöfen zur Herstellung von Waffeln sind in unterschiedlichen Ausführungsformen bekannt. Beispielsweise sind Backöfen zur Herstellung von knusprig spröden Flach- oder Hohlwaffeln bekannt, bei denen ein Waffelteig in auf- und zuklappbaren und verriegelbaren Backzangen unter hohem Druck ausgebacken wird. Diese Waffeln weisen eine knusprige und/oder spröde Konsistenz auf und sind beispielsweise als cremegefüllte Waffelschnitten bekannt mit mehrlagig übereinanderliegenden Creme- und Waffelschichten.

Ferner sind Backöfen zur Herstellung von weichen Waffeln bekannt, bei denen ein Waffelteig in einer auf- und zuklappbaren Waffelzange im Wesentlichen drucklos ausgebacken wird.

Zur industriellen Herstellung von Waffeln, insbesondere zur In-line-Herstellung von derartigen gebackenen Produkten sind Backöfen bekannt, bei denen die Backzangen zum Backen der Produkte entlang dem Verlauf einer Backzangenkette durch mehrere Ofenteile geführt sind. Die Backzangenkette entspricht einem Endlosförderer, an dem mehrere Backzangen angebracht sind. Dabei wird die Backzangenkette mit den Backzangen durch einen vorderen Ofenteil bewegt, in dem die Backzangen aufgeklappt werden, der meist flüssige Teig oder die Backmasse auf die Backzange aufgetragen wird und in weiterer Folge die Backzange wieder geschlossen wird. Bei geschlossener Backzange ist zwischen den beiden Backplatten eine Backform gebildet. In dieser Backform befindet sich der Teig oder die Backmasse. In weiterer Folge wird die Backzange entlang der Backzangenkette durch den beheizten Backraum befördert. Anschließend wird, bevorzugt im vorderen Ofenteil, die Backzange wieder geöffnet und das fertige Backprodukt entnommen. Die Bezeichnung Backzangenkette ist ein für den Fachmann gebräuchlicher Begriff.

Die Beheizung des Backraums geschieht gemäß Stand der Technik über Gasbrenner. In diesen Brennern wird eine Mischung aus Luft und einem Brennstoff, bevorzugt einem gasförmigen Brennstoff wie Erdgas etc. verbrannt. Die Verbrennung geschieht in einer aus dem Brenner austretenden Flamme. Ferner wird zusätzlich zur Primärluft, die zur unmittelbaren Verbrennung des Brenngemisches dient, Sekundärluft durch den Backraum gefördert. Diese Sekundärluft wird insbesondere durch Konvektion aus der Umgebung angesaugt. Insbesondere sind herkömmliche Backöfen an ihrer Unterseite geöffnet, um die Sekundärluft bestmöglich durchzuleiten. Im oberen Bereich des Backraums ist ein Abzug zur Ableitung der Verbrennungsgase vorgesehen.

Nachteilig an bekannten Öfen ist, dass die Effizienz, insbesondere die effiziente Nutzung des Brennstoffs nicht gegeben ist.

Herkömmliche Backöfen sind unter anderem aus der DE 32 17 502 A1, der DE 10 2011 054 018 A1, der US 5,787,800 A, der DE 33 19 886 A1 und der US 2 819 691 A1 bekannt.

Aus der angeführten DE 32 17 502 A1 ist ein Waffelbackofen bekannt, wobei der Backofen eine Backzangenkette mit Backzangen umfasst, und die Brenner auch als Infrarotbrenner ausgebildet sein können.

Aus der angeführten DE 10 2011 054 018 A1 ist ein Heizungssystem bekannt, wobei die Porenbrenner auf Schwenkeinrichtungen angeordnet sind, sodass sie sich in beliebige Richtung verschwenken können.

Aus der angeführten US 5,787,800 A sind ein Backofen und ein Verfahren für das Backen von Backformteilen durch Luftbeheizung bekannt, wobei kombinierte Lüfter- /Heizvorrichtungen eine steuerbare Strömung im Backraum erzeugen Aus der DE 33 19 886 A1 ist es bekannt, Backofenkomponenten mit Spülluft zu kühlen, wobei diese Luft auch als Sekundärluft genutzt werden kann.

Aufgabe der Erfindung ist es nun, einen Backofen zu schaffen, der gegenüber herkömmlichen Backöfen eine verbesserte Effizienz aufweist. Die Verbesserung der Effizienz umfasst bevorzugt mehrere Maßnahmen. Diese Maßnahmen haben zusammen einen synergetischen Effekt, durch den die Effizienz besonders verbessert ist. Jedoch wird auch durch jede einzelne Maßnahme eine Verbesserung der Effizienz bewirkt. Die Teilaufgaben der erfindungsgemäßen Aufgabe sind:
- dass eine vollständige, saubere und insbesondere schadstofffreie Verbrennung des Brennstoffs erfolgt,
- dass die bei der Verbrennung erzeugte Energie, insbesondere die abgegebene Wärme, bestmöglich ausgenutzt wird,
- dass bei der Verbrennung keine Backabfälle mitverbrannt werden, da dadurch, beispielsweise bei dem Verbrennen von Fetten oder Ölen, weitere Schadstoffe erzeugt werden,
- dass der Brennraum durch eintretende Medien so wenig wie möglich gekühlt wird,
- dass der Aufgussbereich, in dem der Teig in die Backzangen eingebracht wird, relativ zum Backraum kühl gehalten werden kann
- und dass der Backraum kompakt gehalten und bestmöglich isoliert ist, sodass der Wärmeverlust verringert wird.
- Verbesserte Regelbarkeit und Steuerbarkeit der Heizung
- Verbesserte Temperaturverteilung der Backplatten

Die erfindungsgemäße Aufgabe wird insbesondere durch die Merkmale der unabhängigen Patentansprüche gelöst.

Bei der Effizienzsteigerung wird insbesondere darauf geachtet, dass die Heizvorrichtung im Wesentlichen schadstofffrei arbeitet und dass die abgegebene Wärme bestmöglich genutzt wird.

Durch das Vorsehen einer Strahlungsheizvorrichtung, in der ein vorgemischtes Brenngemisch verbrannt wird, wird verhindert, dass durch Schwankungen der Anteile des Brenngemischs NOx, insbesondere thermisches NOx, oder unverbrannte Kohlenwasserstoffe als Abgas abgegeben werden. Ferner wird durch den effizienteren Verbrennungsprozess auch die Kohlenmonoxid-Emission reduziert.

Durch die oben liegende Anordnung der Heizvorrichtungen wird verhindert, dass Brennraumabfall wie insbesondere Teigreste, Fette, Öle auf die Heizvorrichtung gelangen und dort verbrannt werden. Dadurch werden jene Abgase vermieden, die durch Verbrennung des Backraumabfalls entstehen.

Durch das Vorsehen von Strahlungsheizvorrichtungen wird ferner verhindert, dass Brennstoff, insbesondere Kohlenwasserstoffe, unverbrannt an die Umgebung abgegeben wird.

Durch die Verwendung von Strahlungsheizvorrichtungen, in denen ein vorgemischtes Brenngemisch aus Primärluft und Brennstoff verbrannt wird, kann der Backraum im Wesentlichen geschlossen ausgebildet sein. Dadurch kann auch die Wärmeisolierung des Backraums im Wesentlichen geschlossen ausgeführt sein. Dies hat ferner den Effekt, dass die bei der Verbrennung entstehende Wärme länger im Backofen gehalten werden kann, wodurch die Effizienz verbessert ist. Ferner kann bei einem im Wesentlichen geschlossenen Backraum keine Umgebungsluft, insbesondere keine Sekundärluft aus der Umgebung in den Backraum eintreten, die den Backraum weiter kühlen würde. Der sekundärluftfreie Betrieb ist mit herkömmlichen Brennern nicht möglich.

Durch die im Wesentlichen geschlossene Ausführung des Backraums kann auch die Konvektionsenergie des aufsteigenden, heißen Brennraumgases besser genutzt werden, da ein im Wesentlichen geschlossenes Konvektions-Kanal-System gebildet ist. Durch die Anordnung weiterer Konvektionselemente, insbesondere zwischen dem oberen Backbereich und dem unteren Backbereich, kann gegebenenfalls das aufsteigende, heiße Brennraumgas in horizontaler Richtung durch den Backraum gefördert werden, wodurch die Wärme dieses Gases besser an die Backzangen und/oder an den Backraum abgegeben werden kann. Diese Konvektionsleitelemente können beispielsweise schräggestellt lamellenförmig angeordnet sein. Dadurch ist es möglich, dass Backraumabfall aus dem oberen Backbereich durch die Konvektionsleitelemente hindurch fallen kann. Der gesamte Backraumabfall sammelt sich im unteren Bereich des Backofens und kann in weiterer Folge einfach entnommen werden. Dadurch wird verhindert, dass dieser Backraumabfall im heißen Backraum verbrannt wird - wodurch die Effizienz weiter verbessert ist.

Ein weiterer Vorteil der erfindungsgemäßen Anordnung der Strahlungsheizvorrichtungen ist, dass diese getrennt voneinander steuer- und/oder regelbar sind. Das Brenngemisch wird über eine Fördervorrichtung, insbesondere ein Gebläse, an die Strahlungsheizvorrichtungen geleitet. Durch Regelung oder Steuerung des Massenstroms des Brenngemischs kann jede Strahlungsheizvorrichtung einzeln, insbesondere unabhängig von den anderen Strahlungsheizvorrichtungen gesteuert oder geregelt werden. Dadurch ist die Effizienz weiter verbessert.

Der erfindungsgemäße Backofen umfasst eine Backzangenkette. Der Begriff "Backzangenkette" ist ein für den Fachmann gebräuchlicher Begriff für einen Endlosförderer, an dem Backzangen festgelegt oder installiert sind. Die Backzangen sind in Transportrichtung aneinander gereiht, wodurch eine kettenförmige Struktur entsteht. Gegebenenfalls ist der Endlosförderer auch aus Kettengliedern zusammengesetzt. Keinesfalls ist die Bezeichnung "Backzangenkette" jedoch auf eine Kette im herkömmlichen Sinn beschränkt, noch muss die Backzangenkette eine herkömmliche Kette umfassen.

Bei dem erfindungsgemäßen Backofen handelt es sich um einen Backofen zur industriellen Herstellung von Backprodukten wie insbesondere Waffeln. Derartige Öfen weisen ein langgestrecktes Maschinengestell auf, das in Förderrichtung der Backzangen Dimensionen von 10 Metern, 20 Metern oder mehr aufweist.

Die Erfindung betrifft insbesondere einen Backofen zum Herstellen gebackener, bevorzugt essbarer, Produkte, umfassend: einen Backraum, mit einem unteren Backbereich und einem oberhalb des unteren Backbereichs angeordneten oberen Backbereich, eine Backzangenkette, die kontinuierlich umlaufend entlang einer oberen Transportebene durch den oberen Backbereich und entlang einer unteren Transportebene durch den unteren Backbereich bewegt ist, und die auf- und zuklappbare Backzangen enthält, wobei die Backzangen je eine Oberplattenanordnung und eine Unterplattenanordnung umfassen, zwischen denen in zugeklappter Stellung eine Backform für die Backprodukte gebildet ist, wobei die Oberplattenanordnung und die Unterplattenanordnung jeweils an ihrer der Backform abgewandten Seite eine Rückenfläche aufweisen, die jeweils über einen Wärme leitenden und speichernden Basiskörper mit der Backform verbunden sind, und wobei die Backzangen beim Übergang von der oberen Transportebene auf die untere Transportebene umgedreht werden, sodass die in der oberen Transportebene oberhalb der Unterplattenanordnung angeordnete Oberplattenanordnung in der unteren Transportebene unterhalb der Unterplattenanordnung angeordnet ist, wobei gegebenenfalls vorgesehen ist, dass zumindest eine als Strahlungsheizvorrichtung ausgebildete obere Heizvorrichtung und zumindest eine als Strahlungsheizvorrichtung ausgebildete untere Heizvorrichtung vorgesehen sind, in denen jeweils ein Brenngemisch enthaltend Primärluft und einen Brennstoff verbrannt wird, dass die obere Heizvorrichtung im oberen Backbereich und oberhalb der oberen Transportebene angeordnet ist und zur Beheizung der Backform von oben auf die Rückenfläche der Oberplattenanordnung gerichtet ist, und dass die untere Heizvorrichtung im unteren Backbereich zwischen der oberen Transportebene und der unteren Transportebene angeordnet ist und zur Beheizung der Backform von oben auf die Rückenfläche der Unterplattenanordnung gerichtet ist.

Gegebenenfalls ist vorgesehen, dass die Heizvorrichtungen jeweils einen porösen Körper an ihrer Unterseite aufweisen, in dem und/oder an dessen Oberfläche das Brenngemisch verbrannt wird und bevorzugt im Wesentlichen flammenfrei verbrannt wird.

Gegebenenfalls ist vorgesehen, dass der poröse Körper ein Metallgewebe, ein Drahtgewebe oder ein Metallgeflecht ist oder enthält.

Gegebenenfalls ist vorgesehen, dass eine Fördervorrichtung, wie insbesondere ein Gebläse zur Zuführung des Brenngemisches an eine Heizvorrichtung vorgesehen ist und dass über Steuerung und/oder Regelung der Fördervorrichtung die Heizleistung der Heizvorrichtung veränderbar ist, und/oder dass die obere Heizvorrichtung mit einer oberen Fördervorrichtung und die untere Heizvorrichtung mit einer unteren Fördervorrichtung verbunden ist, sodass die Heizleistungen der oberen Heizvorrichtung und der unteren Heizvorrichtung getrennt voneinander veränderbar, insbesondere getrennt steuerbar oder getrennt regelbar sind.

Gegebenenfalls ist vorgesehen, dass der Backraum mit Ausnahme folgender Öffnungen im Wesentlichen geschlossen ausgebildet ist: eine Abzugsöffnung zur Ableitung der Verbrennungsgase aus dem Backraum, eine oder mehrere Zuführungsöffnungen für das Brenngemisch, insbesondere für den Primärluft und den Brennstoff, eine Eintrittsöffnung für die Backzangenkette und eine Austrittsöffnung für die Backzangenkette, gegebenenfalls eine Eintrittsöffnung zur Verbesserung der Konvektionsströmung durch Zuführung von Luft oder rezirkuliertem Brennraumgas in den Backraum, sodass Umgebungsluft, insbesondere Sekundärluft nicht oder nur in geringer Menge in den Backraum gelangt.

Gegebenenfalls ist vorgesehen, dass zwischen dem unteren Backbereich und dem oberen Backbereich ein Konvektionsleitelement vorgesehen ist, durch das heißes, aufsteigendes Backraumgas des unteren Backbereichs in horizontaler Richtung abgelenkt und streckenweise durch den Backraum geleitet ist.

Gegebenenfalls ist vorgesehen, dass das Konvektionsleitelement als Anordnung mehrerer schräggestellter Lamellen ausgebildet ist, deren Lamellen sich zwischen dem unteren Backbereich und dem oberen Backbereich quer zur Laufrichtung der Backzangenkette durch den Backraum erstrecken, sodass Backraumabfall zwischen den Lamellen durch das Konvektionsleitelement hindurchfallen kann, oder dass das Konvektionsleitelement als horizontal verlaufender Plattenkörper ausgebildet ist, der sich zwischen dem unteren Backbereich und dem oberen Backbereich durch den Backraum erstreckt, wobei der Plattenkörper gegebenenfalls Öffnungen aufweist.

Gegebenenfalls ist vorgesehen, dass mehrere obere Heizvorrichtungen und/oder mehrere untere Heizvorrichtungen vorgesehen sind, und/oder dass die Heizleistungen der oberen Heizvorrichtungen und der unteren Heizvorrichtungen getrennt voneinander veränderbar, insbesondere getrennt steuerbar oder getrennt regelbar sind, oder dass die Heizleistungen zweier oberer Heizvorrichtungen getrennt voneinander veränderbar, insbesondere getrennt steuerbar oder getrennt regelbar sind oder dass die Heizleistungen zweier unterer Heizvorrichtungen getrennt voneinander veränderbar, insbesondere getrennt steuerbar oder getrennt regelbar sind.

Gegebenenfalls ist vorgesehen, dass die Abzugsöffnung entlang der Konvektionsströmungsrichtung des Backraumgases entfernt von den Heizvorrichtungen angeordnet ist, sodass das heiße aufsteigende Backraumgas in horizontaler Richtung durch den Backraum geleitet ist, bevor es durch die Abzugsöffnung austritt.

Gegebenenfalls ist vorgesehen, dass eine obere Heizvorrichtung und eine untere Heizvorrichtung im Bereich des hinteren Umlenkpunktes der Backzangenkette und/oder unmittelbar vor und nach dem hinteren Umlenkpunkt der Backzangenkette vorgesehen sind, und/oder dass die Abzugsöffnung entlang der Konvektionsströmungsrichtung des Backraumgases entfernt von den Heizvorrichtungen bevorzugt in der Nähe der Trennwand, angeordnet ist.

Gegebenenfalls ist vorgesehen, dass ein vorderer Ofenteil vorgesehen ist, in dem die Backzangen von der unteren Transportebene in die obere Transportebene geführt und umgelenkt sind, dass im vorderen Ofenteil insbesondere entlang der oberen Transportebene, eine Einrichtung zum Aufklappen der Backzangen, eine Ausgabestation, eine Beschickungsstation und eine Einrichtung zum Zuklappen der Backzangen in Laufrichtung der Backzangen hintereinander angeordnet sind, und dass der vordere Ofenteil durch eine Trennwand von dem Backraum abgetrennt ist, wobei in der Trennwand eine Eintrittsöffnung für die Backzangenkette und eine Austrittsöffnung für die Backzangenkette vorgesehen sind.

Gegebenenfalls ist vorgesehen, dass die Wände des Backraums vollständig oder teilweise mit einer Wärmeisolierung versehen sind.

Gegebenenfalls ist vorgesehen, dass der Backraum an seiner Unterseite geschlossen ist und an seiner Unterseite mit einer Wärmeisolierung versehen ist, und dass der Backraum gegebenenfalls an der Unterseite eine Öffnung aufweist, wobei diese Öffnung weniger als zehn Prozent der Fläche der geschlossenen Unterseite des Backraums einnimmt.

Gegebenenfalls ist vorgesehen, dass der Backraum eine Heizzone umfasst, in der zumindest eine Heizvorrichtung vorgesehen ist und in der die Backzangen durch direkte Einwirkung der Wärmestrahlung der Heizvorrichtung beheizt werden.

Gegebenenfalls ist vorgesehen, dass der Backraum eine strahlungsheizungsfreie Zone umfasst, in der entlang der oberen Transportebene und/oder entlang der unteren Transportebene keine direkte Beheizung der Backzangen durch die Strahlung der Heizvorrichtung vorgesehen ist und in der die Backzangen gegebenenfalls durch Einwirkung der Konvektionswärme des in Konvektionsströmungsrichtung bewegten heißen Brennraumgases beheizt werden.

Gegebenenfalls ist vorgesehen, dass die Abzugsöffnung in einer strahlungsheizungsfreien Zone des Backraums vorgesehen ist.

Gegebenenfalls ist vorgesehen, dass ein Sensor zur Regelung der Heizvorrichtung, insbesondere zur Regelung der Heizleistung der Heizvorrichtung vorgesehen ist, der bevorzugt als berührungsloser Temperatursensor ausgebildet ist.

Gegebenenfalls ist vorgesehen, dass eine Eintrittsöffnung zur Zuführung von Luft oder rezirkuliertem Brennraumgas in den Backraum vorgesehen ist, die insbesondere im Backraum entlang der Konvektionsströmungsrichtung des Backraumgases entfernt von der Abzugsöffnung vorgesehen ist und gegebenenfalls im Bereich des hinteren Umlenkpunkts des Backofens vorgesehen ist, sodass zur Verbesserung der Konvektionsströmung kontrolliert Luft oder rezirkuliertes Brennraumgas in den Backraum eingebracht wird, wobei die Luft bevorzugt vorgewärmt wird, um eine Abkühlung des Backraums zu verhindern, und wobei die Fläche der Eintrittsöffnung bevorzugt weniger als zehn, zwanzig oder dreißig Prozent der den Backraum begrenzenden Fläche einnimmt.

Erfindungsgemäß ist vorgesehen, dass bei allen Ausführungsbeispielen im Brennraum eine Öffnung zur Unterstützung der Konvektion vorgesehen ist, wobei durch diese Öffnung Umgebungsluft oder rezirkuliertes Brennraumgas in den Brennraum eingebracht wird.

Gegebenenfalls ist kein Konvektionselement vorgesehen. Das heiße Brennraumgas wird in diesem Fall bevorzugt durch die obere Brennraumbegrenzung selbst in horizontaler Richtung abgelenkt. Insbesondere wird das heiße Brennraumgas durch die Anordnung der Heizvorrichtungen, der Abzugsöffnung und gegebenenfalls durch eine weitere Öffnung zur Verbesserung der Konvektion daran gehindert, auf kürzestem Wege den Backraum über die Abzugsöffnung zu verlassen. Durch die Umleitung der Konvektionsströmungsrichtung wird das heiße Brennraumgas länger im Brennraum gehalten, wodurch der Wärmeübergang und die Wärmeabgabe dieses Gases an die Backzangen verbessert sind und effizientere Nutzung der Heizenergie bewirkt wird.

Gegebenenfalls sind in allen Ausführungsformen ausschließlich als Strahlungsheizungsvorrichtungen ausgebildete Heizvorrichtungen vorgesehen, bei denen die Verbrennung bevorzugt im Wesentlichen flammenfrei erfolgt.

In weiterer Folge wird die Erfindung anhand von Figuren weiter beschrieben.
Fig. 1 zeigt eine schematische Seitenansicht eines erfindungsgemäßen Backofens.
Fig. 2 zeigt eine schematische Darstellung einer Ausführungsform des erfindungsgemäßen Backofens.
Fig. 3 zeigt eine schematische Darstellung der Gasführung in der Ausführung des Ofens gemäß Fig. 2.
Die Figuren 4a, 4b, 4c und 4d zeigen schematisch in einer Draufsicht von oben verschiedene Anordnungsmöglichkeiten für die oberen oder unteren Heizvorrichtungen und damit unterschiedliche Möglichkeiten zur Beeinflussung der Wärmeübertragung.
Fig. 5 zeigt eine schematische Ansicht einer weiteren Ausführungsform eines erfindungsgemäßen Backofens.
Fig. 6 zeigt eine weitere schematische Darstellung einer Ausführungsform des erfindungsgemäßen Backofens.
Fig. 7 zeigt eine weitere schematische Darstellung einer Ausführungsform des erfindungsgemäßen Backofens.
Die Fig. 8a, 8b, 8c und 8d zeigen schematisch unterschiedliche Anordnungen der Elemente der oberen oder unteren Heizvorrichtungen entlang des Backraums in einer Draufsicht von oben.

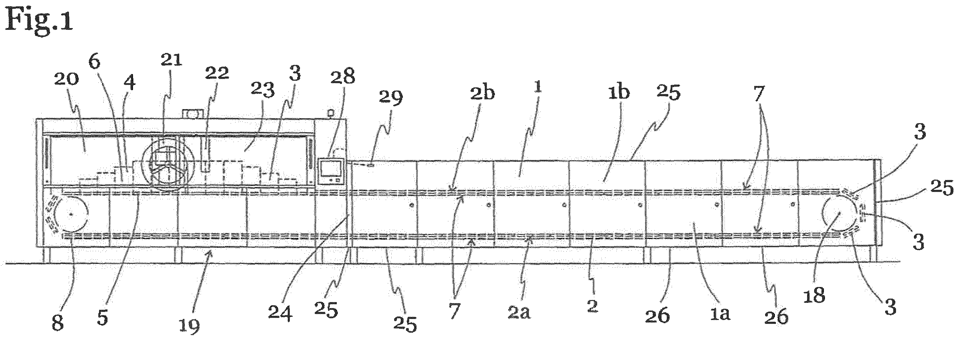

Fig. 1 zeigt einen erfindungsgemäßen Backofen mit einem Backraum 1, einem unteren Backbereich 1a sowie einem oberen Backbereich 1b. Die Backzangenkette 2 erstreckt sich entlang einer unteren Transportebene 2a und entlang einer oberen Transportebene 2b durch den Backraum 1. Die Backzangenkette ist eine Ausführung eines Endlosförderers. An diesem sind nacheinander in Transportrichtung, ähnlich einer Kette, mehrere Backzangen 3 angeordnet. Bevorzugt ist entlang des gesamten Verlaufs der Backzangenkette eine Backzange 3 nach der anderen angeordnet.

Die Backzangenkette mit ihren Backzangen 3 erstreckt sich durch den Backraum 1 sowie durch den vorderen Ofenteil 19. In diesem vorderen Ofenteil 19 ist eine Einrichtung 20 zum Aufklappen der Backzangen 3, eine Ausgabestation 21 zur Entnahme der gebackenen Körper, eine Beschickungsstation 22 zum Auftrag des Teigs oder der Teigmasse sowie eine Einrichtung 23 zum Zuklappen der Backzangen 3 angeordnet. Der vordere Ofenteil ist gemäß einer bevorzugten Ausführungsform durch eine Trennwand 24 vom Backraum 1 im Wesentlichen getrennt.

Die Backzangen 3 umfassen eine Oberplattenanordnung 4 sowie eine Unterplattenanordnung 5. Die Oberplattenanordnung 4 ist derart mit der Unterplattenanordnung 5 verbunden, sodass die Backzange geöffnet werden kann. In geschlossenem Zustand ist zwischen den beiden Plattenanordnungen 4 und 5 eine Backform 6 gebildet, in der der Teig oder die Backmasse ausgebacken werden kann.

Über einen großen Teil des Transports der Backzangen 3 entlang der Backzangenkette 2 sind die Backzangen 3 geschlossen. Die Backzangen 3 weisen an ihren Außenflächen, insbesondere an der oberen oder an der unteren außenliegenden Fläche jeweils eine Rückenfläche 7 auf. Diese außenliegenden Rückenflächen 7 sind mit den innenliegenden Flächen, insbesondere mit der Backform 6, verbunden. Die Verbindung geschieht über einen Basiskörper 8, der dazu eingerichtet ist, Wärme zu leiten und Wärme zu speichern. Der Basiskörper 8 kann beispielsweise als Backplatte aus Metall, insbesondere aus Stahl, ausgebildet sein. Dieser als Backplatte ausgebildete Basiskörper weist an seiner einen Seite eine reliefartige Struktur auf, durch die zumindest eine Hälfte der Backform gebildet ist. An der anderen Seite, insbesondere an der Rückenfläche 7, kann die Backplatte flach oder gerippt ausgeführt sein.

Gegebenenfalls ist oder sind der oder die Basiskörper 8 mehrteilig ausgebildet. Beispielsweise kann eine Rahmenkonstruktion vorgesehen sein, in der eine Backplatte gehalten wird. Grundsätzlich weist der Basiskörper 8, der ein oder mehrteilig ausgeführt sein kann, Eigenschaften auf, die eine Speicherung und eine Leitung der Wärme von der Rückenfläche 7 zur Backform 6 ermöglichen.

Die Backzangenkette 2 ist an einem hinteren Umlenkpunkt 18 umgelenkt. Dieser Umlenkpunkt ist beispielsweise als Umlenkrolle ausgeführt. In diesem Bereich werden die Backzangen von der oberen Transportebene 2b in die untere Transportebene 2a befördert. Bei dieser Umlenkung werden gemäß einer bevorzugten Ausführungsform die Backzangen mit dem Endlosförderer mitgeführt und somit umgedreht. Die im oberen Backbereich 1b oben liegende Oberplattenanordnung 4 befindet sich dadurch im unteren Backbereich 1a an der Unterseite der Backzange.

Im vorderen Ofenteil 19 ist ein weiterer Umlenkpunkt vorgesehen, an dem die Backzangen vom unteren Backbereich 1a bzw. von der unteren Transportebene 2a wieder zurück in die obere Transportebene 2b bzw. in den oberen Backbereich 1b befördert werden. Auch bei dieser Umlenkung wird die Backzange umgedreht.

Ferner umfasst die erfindungsgemäße Vorrichtung bevorzugt eine Steuerungseinheit 28. Diese Steuerungseinheit 28 ist dazu geeignet und/oder eingerichtet, unterschiedliche Parameter des Backofens zu steuern. Insbesondere betrifft dies den Antrieb der Backzangenkette 2, den Antrieb weiterer Komponenten wie beispielsweise die Beschickungsstation 22, die Ausgabestation 21, gegebenenfalls die Einrichtung zum Zuklappen der Backzangen 23, gegebenenfalls die Einrichtung zum Aufklappen der Backzangen 20 und/oder die Steuerung der Beheizung des Backraums 1. Bevorzugt ist zumindest ein Sensor 29 vorgesehen. Dieser Sensor kann beispielsweise ein Temperatursensor, ein Feuchtesensor und/oder ein Bewegungssensor sein. Zur Regelung der Heizleistung kann ein Temperatursensor eingesetzt werden.

Gemäß einer bevorzugten Ausführungsform der Erfindung ist die Unterseite 26 des Backraums im Wesentlichen geschlossen ausgeführt. Bevorzugt ist der gesamte Backraum 1 mit einer Wärmeisolierung 25 versehen, sodass die Wärmeverluste verringert sind.

In Fig. 1 ist aus Gründen der Übersichtlichkeit die Anordnung der Heizvorrichtungen sowie das Konvektionselement nicht dargestellt.

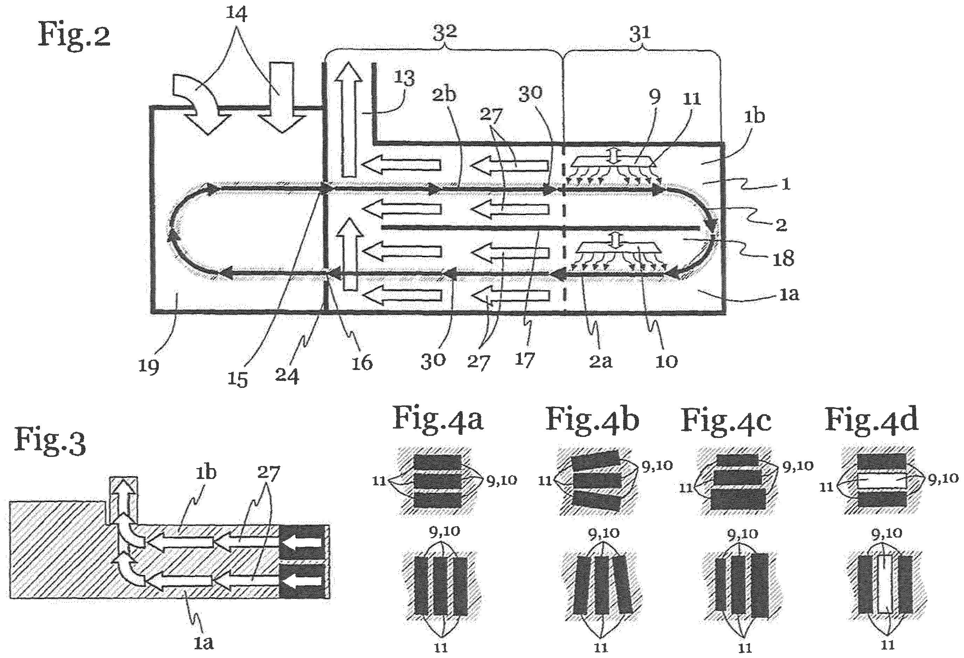

Fig. 2 zeigt eine erste mögliche Konfiguration eines erfindungsgemäßen Backofens in einer schematischen Seitenansicht bzw. in einer schematischen Schnittdarstellung. Der Backofen umfasst einen Backraum 1 mit einem unteren Backbereich 1a, einem oberen Backbereich 1b, einer schematisch dargestellten Backzangenkette 2, die entlang einer unteren Transportebene 2a und entlang einer oberen Transportebene 2b durch den Backraum bewegt ist. Dabei ist die Backzangenkette 2 im Wesentlichen als umlaufender Endlosförderer ausgebildet. Auf diesem umlaufenden Endlosförderer sind Backzangen 3 angeordnet, die aus Gründen der Übersichtlichkeit in der Fig. 2 nicht dargestellt sind. Die Backzangenkette 2 verläuft auch durch den vorderen Ofenteil 19, in dem die nicht dargestellten Komponenten Ausgabestation 21, Beschickungsstation 22 sowie Einrichtungen zum Auf- und zum Zuklappen der Backzangen 20, 23 vorgesehen sind. Der vordere Ofenteil 19 ist bevorzugt durch eine Trennwand 24 vom Backraum 1 im Wesentlichen abgetrennt. Der Backraum 1 ist im Wesentlichen geschlossen ausgeführt. Insbesondere ist er an seiner Unterseite 26 im Wesentlichen geschlossen.

Im Wesentlichen geschlossen bedeutet darüber hinaus, dass verhältnismäßig kleine Öffnungen vorhanden sein können. Diese Öffnungen sind beispielsweise durch fertigungstechnische Toleranzen bedingt, da eine hermetische Abdichtung des Backraums einer derart großen Anlage nur mit sehr viel Aufwand möglich wäre. Ferner umfasst der Backraum 1 eine Abzugsöffnung 13 zur Abführung der Verbrennungsgase. Ferner umfasst der Backraum 1, und insbesondere die Trennwand 24 eine Eintrittsöffnung 15 für den Eintritt der Backzangenkette. Darüber hinaus umfasst der Backraum 1, und insbesondere die Trennwand 24 eine Austrittsöffnung 16 zum Austritt der Backzangenkette und der Backzangen.

Im Backraum 1 sind eine obere Heizvorrichtung 9 und eine untere Heizvorrichtung 10 vorgesehen. Die obere Heizvorrichtung 9 ist von oben auf die Backzangen der Backzangenkette 2 gerichtet. Die obere Heizvorrichtung 9 befindet sich im oberen Backbereich 1b und oberhalb der oberen Transportebene 2b. Die untere Heizvorrichtung 10 ist im unteren Backbereich 1a angeordnet. Ferner ist die untere Heizvorrichtung 10 oberhalb der unteren Transportebene 2a angeordnet. Bevorzugt ist die untere Heizvorrichtung 10 zwischen der oberen Transportebene 2b und der unteren Transportebene 2a angeordnet. Die untere Heizvorrichtung 10 ist im Wesentlichen nach unten gerichtet, sodass die bevorzugt als Strahlungsheizung ausgebildete Heizvorrichtung auf die nach oben weisenden Rückenflächen 7 der Backzangen 3 gerichtet ist. Auch die obere Heizvorrichtung 9 ist von oben auf die Backzangen 3 gerichtet, womit die Strahlung auf die oben liegende Rückenfläche 7 der Backzange 3 wirkt.

Da am hinteren Umlenkpunkt 18 die Backzangen 3 bevorzugt um 180° gedreht werden, wird durch die obere Heizvorrichtung 9 eine Rückenfläche 7 der Backzange 3 bestrahlt und durch die untere Heizvorrichtung 10 die andere, gegenüberliegende Rückenfläche 7 der Backzange 3.

Bevorzugt kann die obere Heizvorrichtung 9 unabhängig von der unteren Heizvorrichtung 10 gesteuert oder geregelt werden. Insbesondere wird die Heizleistung gesteuert oder geregelt, sodass die von den Backzangen aufgenommenen Wärmemengen verändert und angepasst werden können.

Die dargestellte Ausführung der Heizvorrichtungen 9, 10 ist eine schematische Darstellung. Es können dabei eine oder mehrere obere Heizvorrichtungen 9 und/oder eine oder mehrere untere Heizvorrichtungen 10 vorgesehen sein. Diese einzelnen Heizvorrichtungen 9, 10 können gegebenenfalls getrennt voneinander gesteuert oder geregelt werden. Die Steuerung der Strahlungsintensität und der abgegebenen Wärmemenge kann beispielsweise durch die Durchsatzsteuerung eines Gebläses oder einer Fördervorrichtung erfolgen, wodurch die eingebrachte Brennstoffmenge verändert wird. Ferner kann die an die Backzangen 3 abgegebene Wärmemenge auch durch weitere Regelungsmöglichkeiten oder Steuerungsmöglichkeiten verändert werden, wie in der Figurenbeschreibung der Figuren 4a bis 4d weiter ausgeführt werden wird.

In dem Backraum 1 ist bevorzugt zumindest ein Konvektionselement 17 vorgesehen. Dieses Konvektionselement 17 ist zwischen der unteren Transportebene 2a und der oberen Transportebene 2b angeordnet. Durch das Konvektionselement 17 ist der untere Backbereich 1a vom oberen Backbereich 1b getrennt. Bevorzugt bildet das Konvektionselement 17 die Grenze zwischen unterem Backbereich 1a und oberem Backbereich 1b. Das Konvektionselement 17 kann beispielsweise als durchgehender plattenförmiger Körper ausgebildet sein, der sich zwischen den beiden Backbereichen 1a und 1b erstreckt. Das Konvektionselement 17 erstreckt sich bevorzugt parallel zur unteren Transportebene 2a und/oder zur oberen Transportebene 2b. Bevorzugt ist es seitlich, gegebenenfalls beidseitig, am Maschinengestell angebracht und erstreckt sich quer zur Transportrichtung 30 der Backzangen von einer Innenseite bis zur gegenüberliegenden Innenseite des Backraums 1.

Gegebenenfalls ist das Konvektionselement 17 nicht durchgehend ausgebildet, sondern weist Öffnungen auf. Beispielsweise ist das Konvektionselement 17 lamellenförmig aufgebaut. Bei einem derartigen Konvektionselement sind zwischen dem unteren Backbereich 1a und dem oberen Backbereich 1b mehrere schräggestellte, lamellenförmige oder plattenförmige Einzelkonvektionselemente angeordnet, zwischen denen ein Abstand vorgesehen ist. Eine derartige lamellenförmige Ausgestaltung hat den Vorteil, dass Backraumabfall durch das Konvektionselement 17 hindurch fallen kann. Gegebenenfalls kann das Konvektionselement 17 auch gänzlich entfallen.

Durch das Konvektionselement 17 ist heißes Brennraumgas in horizontaler Richtung abgelenkt. Insbesondere wird das heiße Brennraumgas des unteren Backbereichs 1a daran gehindert, auf kürzestem Wege den Backraum 1 über die Abzugsöffnung 13 zu verlassen. Durch die Umleitung der Konvektionsströmungsrichtung 27 wird das heiße Brennraumgas länger im Backraum 1 gehalten, wodurch der Wärmeübergang und die Wärmeabgabe dieses Gases an die Backzangen 3 verbessert sind und effizientere Nutzung der Heizenergie bewirkt wird.

Ferner ist bevorzugt eine Zuführöffnung für Frischluft vorgesehen. Diese ist in der vorliegenden Darstellung schematisch eingezeichnet. Insbesondere können auch mehrere Öffnungen vorgesehen sein: Eine Öffnung beispielsweise für die Verbrennungsluft, insbesondere für den Primärluft und eine für den Brennstoff, insbesondere für gasförmigen Brennstoff wie Erdgas. Bevorzugt ist auch eine Öffnung 14 zur Zuführung von Frischluft vorgesehen. Diese dient beispielsweise der Kühlung des vorderen Ofenteils 19 der Backmaschine und/oder zur Erzeugung eines leichten Überdrucks im vorderen Ofenteil 19, sodass das heiße Gas aus dem Backraum 1 nicht in den vorderen Ofenteil 19 strömt. Eine Zuführöffnung für das Brenngemisch kann auch im Bereich des Backraums 1 und insbesondere im Bereich des hinteren Umlenkpunktes 18 vorgesehen sein.

Ferner kann in allen Ausführungsformen auch eine Eintrittsöffnung bei der hinteren Umlenkung zur Zuführung von Luft, die eventuell vorgewärmt wird, vorgesehen sein. Diese dient einerseits dazu die Kondensatbildung während der Aufheizphase zu vermeiden und anderseits, um die Konvektion in Richtung Abzugsöffnung 13 zu fördern.

Der Primärluft wird beispielsweise durch Ansaugen der Umgebungsluft aus der Produktionshalle zugeführt. Gegebenenfalls ist auch eine Frischluftzufuhr von außerhalb der Produktionshalle vorgesehen. Der Brennstoff kann beispielsweise über eine Gasleitung in den erfindungsgemäßen Backofen geleitet werden. Gegebenenfalls ist eine Mischvorrichtung zur Mischung des Primärlufts mit dem Brennstoff vorgesehen. Dieser Mischer kann außerhalb des Backofens oder innerhalb des Backofens liegen. Bevorzugt ist der Mischer durch eine Steuerungseinheit gesteuert, sodass die Zusammensetzung des Brenngemischs verändert werden kann. Beispielsweise ist diese Zusammensetzung geregelt, sodass über eine Lambdasonde der Sauerstoffgehalt im Abgas gemessen werden kann. Über die Regelung der Luftzahl kann in weiterer Folge eine optimale Verbrennung des Brennstoffs bewirkt werden. Gegebenenfalls wird der Primärluft und/oder der Brennstoff vor der Verbrennung vorgewärmt. Diese Vorwärmung geschieht beispielsweise durch eine Durchführung des Brenngemischs oder dessen Komponenten durch den Backraum 1 und/oder durch den vorderen Ofenteil 19. Gemäß einer bevorzugten Ausführungsform wird das Brenngemisch und insbesondere der Primärluft durch den vorderen Ofenteil 19 geleitet. Dort wird der Primärluft vorgewärmt, um eine effizientere Verbrennung zu bewirken. Ferner wird gegebenenfalls durch das Zuführen kühler Luft der vordere Ofenteil 19 gekühlt. Der Backraum 1 ist hingegen durch eine Trennwand 24 von dem vorderen Ofenteil 19 im Wesentlichen abgetrennt. Diese Konfiguration der Zuführung und der Mischung des Brenngemischs und insbesondere des Primärlufts und des Brennstoffs kann in allen Ausführungsformen gleich oder ähnlich wie in Fig. 2 geschehen.

Die Heizvorrichtungen 9, 10 aller Ausführungsformen sind, wie auch weiter oben beschrieben, bevorzugt als Strahlungsheizvorrichtungen ausgeführt. Derartige Strahlungsheizvorrichtungen können beispielsweise als Porenbrenner, Metallgewebebrenner oder ähnliche Brenner ausgeführt sein. Dabei wird ein vorgemischtes Brenngemisch enthaltend einen Brennstoff und Primärluft in die Heizvorrichtung geleitet und dort intern oder an der Oberfläche eines porösen Körpers verbrannt. Der poröse Körper ist bevorzugt als Metallgewebe ausgeführt. Dieses Metallgewebe umfasst eine poröse Struktur aus Metallfasern, die eine verhältnismäßig große Oberfläche aufweist. An der Oberfläche und/oder im Zwischenraum dieser Metallfasern, wird das Brenngemisch verbrannt. Die Wärme wird dabei zu einem Großteil als Strahlungswärme abgegeben. Diese Strahlung ist bei der erfindungsgemäßen Anordnung im Wesentlichen nach unten auf die Rückenflächen 7 der Backzangen 3 gerichtet. Jedoch wird durch den Massenstrom des eingebrachten Brennstoffgemischs Wärme auch über Konvektion in den Backraum 1 eingebracht. Insbesondere werden Verbrennungsgase durch den porösen Körper in den Backraum 1 geleitet. Dieses heiße Brennraumgas wird, wie weiter oben beschrieben, durch den Backraum geleitet, um die Wärme optimal an die Backzangen 3 abgeben zu können.

Die Strahlungsheizvorrichtungen aller Ausführungsformen umfassen bevorzugt eine Mischkammer, in die das Brenngemisch eingebracht wird. Diese Mischkammer entspricht im Wesentlichen einem Hohlraum. Diese Mischkammer kann beispielsweise kastenförmig ausgebildet sein und eine rechteckige Öffnung aufweisen. Grundsätzlich kann jedoch jede Form einer Öffnung vorgesehen sein. Die Öffnung ist bevorzugt, wie oben beschrieben, mit einem porösen Körper abgedeckt oder verschlossen. Auf der gegenüberliegenden Seite des porösen Körpers weist die Mischkammer eine Öffnung zur Zuführung des Brenngemischs auf. Wird nun das Brenngemisch in die Mischkammer eingebracht, so wird das Brenngemisch dort verteilt und gleichmäßig in den porösen Körper geleitet. Nach Zündung der Strahlungsheizvorrichtung kommt es zu einer Verbrennung des Brenngemischs in den Zwischenräumen oder an der Oberfläche des porösen Körpers. Dieser poröse Körper wird dadurch stark erwärmt und gibt Wärme in Form von Wärmestrahlung ab.

In der Ausführungsform der Fig. 2 sind die Heizvorrichtungen 9, 10 bevorzugt im Bereich oder unmittelbar vor und nach dem hinteren Umlenkpunkt 18 angeordnet. Die Backzangen 3 werden somit lediglich in einem Teilbereich ihres Weges durch den Backofen durch die Heizvorrichtungen beheizt. Um dennoch ein gleichmäßiges Ausbacken der zu bildenden Backprodukte zu bewirken, weisen die Backzangen 3 einen Basiskörper 8 auf. Dieser Basiskörper 8 kann einteilig oder mehrteilig ausgeführt sein. Er weist eine Wärmespeicherkapazität auf, sodass die durch die Heizvorrichtungen 9, 10 eingebrachte Wärme über längere Zeit an die Backform 6 abgegeben werden kann. Dabei wird auch Wärme von der Rückenfläche 7 in die Backform 6 geleitet.

Fig. 3 zeigt eine schematische Darstellung der Konvektionsströmungsrichtungen 27 bzw. der Führung der Konvektionsströmung des heißen Brennraumgases. Insbesondere im unteren Backbereich 1a ist die Konvektionsströmungsrichtung in horizontaler Richtung geführt, sodass das heiße Backraumgas länger mit den Backzangen in Berührung steht.

Die Figuren 4 zeigen in einer Draufsicht von oben grundsätzlich zwei unterschiedliche Möglichkeiten der Anordnung der Heizvorrichtungen 9, 10. Die Heizvorrichtungen weisen bevorzugt einen langgestreckten, rechteckigen als poröser Körper 11 ausgebildeten Strahlungskörper auf. Die Heizvorrichtungen 9, 10 können entweder quer zur Transportrichtung 30, wie in den Figuren 4 unten gezeigt oder längs zur Transportrichtung 30 der Backzangen, wie in den Figuren 4 oben gezeigt, angeordnet sein.

Wie in Fig. 4b gezeigt, kann die Lage der Heizvorrichtungen verändert werden um die Wärmeübertragung zu beeinflussen. So kann der Winkel zwischen den Heizvorrichtungen und der Transportrichtung 30 verändert werden oder veränderbar ausgestaltet sein.

Ferner kann, wie in Fig. 4c dargestellt ist, der Abstand zwischen der Heizvorrichtung 9, 10 und den Backzangen 3 verändert werden.

In Fig. 4d ist schematisch dargestellt, dass einzelne Heizvorrichtungen abschaltbar oder getrennt voneinander regelbar sind, um die übertragene Wärmemenge zu beeinflussen.

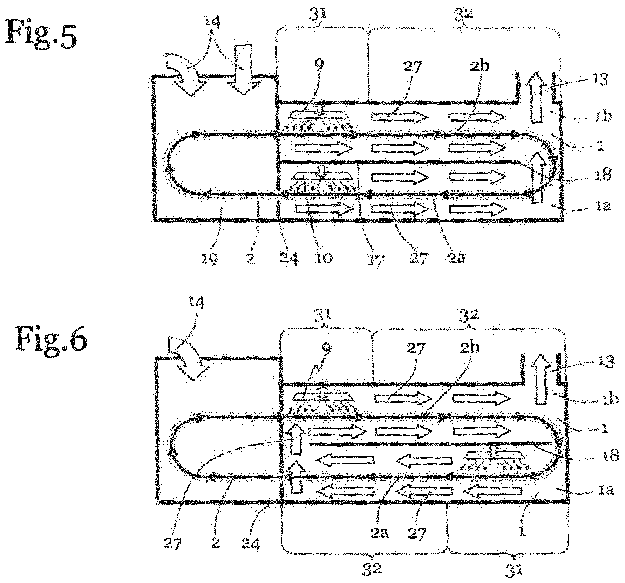

Fig. 5 zeigt eine weitere Ausführungsform eines erfindungsgemäßen Backofens. Die einzelnen Komponenten dieser Ausführungsform entsprechen im Wesentlichen den Komponenten des Backofens aus Fig. 2. Eine Backzangenkette 2 erstreckt sich umlaufend entlang einer unteren Transportebene 2a und einer oberen Transportebene 2b durch den Backraum 1 und insbesondere durch den unteren Backbereich 1a und den oberen Backbereich 1b. Zusätzlich ist die Backzangenkette 2, bzw. deren Backzangen 3 durch den vorderen Ofenteil 19 geführt. Ferner umfasst der Backofen eine obere Heizvorrichtung 9 sowie eine untere Heizvorrichtung 10. Diese Heizvorrichtungen 9, 10 sind bevorzugt als Strahlungsheizvorrichtungen ausgebildet und wirken von oben auf die jeweiligen im Bereich der Heizvorrichtungen 9, 10 angeordneten Backzangen 3. Der vordere Ofenteil 19 ist durch eine Trennwand 24 vom Backraum 1 abgetrennt. Lediglich Öffnungen zum Eintritt 15 und zum Austritt 16 der Backzangenkette 2 sind vorgesehen. Die Heizvorrichtungen 9, 10 sind gemäß dieser Ausführungsform unmittelbar vor oder unmittelbar nach der Trennwand 24 vorgesehen. Ferner umfasst der Backraum 1 eine Abzugsöffnung 13. Diese Abzugsöffnung 13 ist entlang der Konvektionsströmungsrichtung 27 entfernt von den Heizvorrichtungen 9, 10 angeordnet. Insbesondere weist die Abzugsöffnung in Transportrichtung 30 der Backzangen 3 einen Abstand auf. Durch diesen Abstand ist die horizontale Ablenkung der heißen Brennraumgase durch einen Großteil des Ofens bewirkt.

Zwischen dem oberen Backbereich 1b und dem unteren Backbereich 1a ist ein Konvektionselement 17 vorgesehen. Wie in den vorangegangenen Ausführungsformen, kann das Konvektionselement 17 eine durchgehende Wand, plattenförmig oder lamellenförmig aufgebaut sein. Ferner könnte das Konvektionselement 17 in allen Ausführungsformen auch gitterrostförmig aufgebaut sein. Der Backraum 1 ist, wie in den vorangegangenen Ausführungsformen im Wesentlichen geschlossen ausgebildet und insbesondere an seiner Unterseite 26 geschlossen. Durch das Konvektionselement 17 ist die Konvektionsströmungsrichtung 27 in horizontaler Richtung abgelenkt, sodass das heiße Brennraumgas in waagrechter oder zumindest teilweise waagrechter Richtung entlang der Transportflächen durch den Backraum geleitet wird.

Fig. 6 zeigt eine weitere mögliche Konfiguration des erfindungsgemäßen Backofens, bei dem sich wiederum eine Backzangenkette 2 entlang einer unteren Transportebene 2a und einer oberen Transportebene 2b durch einen unteren Backbereich 1a und einem oberen Backbereich 1b des Backraums 1 erstreckt. Die einzelnen Komponenten dieser Ausführungsform entsprechen im Wesentlichen den Komponenten des Backofens aus Fig. 2. Im Backraum ist eine untere Heizvorrichtung 10 vorgesehen. Insbesondere ist die untere Heizvorrichtung 10 im unteren Backbereich 1a vorgesehen. Im oberen Backbereich 1b ist die obere Heizvorrichtung 9 vorgesehen. Ferner ist der Backraum 1, wie auch bei den vorangegangenen Ausführungsformen, durch eine Abzugsöffnung 13 geöffnet. Die obere Heizvorrichtung 9 ist beabstandet von der Abzugsöffnung 13 angeordnet, sodass heißes Brennraumgas der oberen Heizvorrichtung 9 in horizontaler Richtung abgelenkt durch den Backraum 1 transportiert wird, um durch natürliche oder künstliche Konvektion entlang der Konvektionsströmungsrichtung 27 und weiter durch die Abzugsöffnung 13 aus dem Backraum 1 befördert zu werden. Dazu ist in dieser Ausführungsform die obere Heizvorrichtung 9 in Transportrichtung der Backzangen im Bereich oder direkt nach der Trennwand 24 vorgesehen.

Die Abzugsöffnung 13 ist entfernt von der Trennwand 24 angeordnet. Insbesondere ist die Abzugsöffnung 13 im Bereich des hinteren Umlenkpunkts 18 angeordnet.

Die untere Heizvorrichtung 10 ist in dieser Ausführungsform entlang der Konvektionsströmungsrichtung 27 oder entlang der Transportebenen 2a, 2b entfernt von der oberen Heizvorrichtung 9 angeordnet. Zwischen dem unteren Backbereich 1a und dem oberen Backbereich 1b ist gemäß der vorangegangenen Beschreibung ein Konvektionselement 17 vorgesehen. Dieses ist derart ausgebildet, dass die Konvektionsströmungsrichtung 27 im unteren Backbereich 1a in horizontaler Richtung entlang der Transportebene abgelenkt ist. Insbesondere ist in dieser Konfiguration die untere Heizvorrichtung 10 entfernt von der Trennwand 24 vorgesehen. Besonders bevorzugt ist die untere Heizvorrichtung 10 im Bereich des hinteren Umlenkpunkts 18 oder unmittelbar danach angeordnet. Bei dieser Konfiguration wird in einem Längsschnitt der Vorrichtung betrachtet heißes Brennraumgas S-förmig durch den Backraum gefördert. Dazu weist das Konvektionselement 17 einen Abstand von der Trennwand 24 auf. Dadurch ist eine Öffnung gebildet, durch die das Brennraumgas des unteren Backbereichs 1a in den oberen Backbereich 1b strömen kann.

Gemäß einer weiteren, nicht dargestellten Ausführungsform ist die Backraumkonfiguration der Fig. 6 im Wesentlichen gespiegelt, sodass die Abzugsöffnung 13 im Bereich der Trennwand 24 vorgesehen ist. In dieser Ausführungsform ist die obere Heizvorrichtung 9 entfernt von der Abzugsöffnung 13, insbesondere unmittelbar vor oder im Bereich des hinteren Umlenkpunktes 18 angeordnet. Die untere Heizvorrichtung 10 ist entfernt, insbesondere seitlich entlang der Transportebene entfernt von der oberen Heizvorrichtung 9 angeordnet. Zwischen dem unteren Backbereich und dem oberen Backbereich ist wiederum ein Konvektionselement 17 vorgesehen. Diese Konvektionselement 17 ist beabstandet von dem hinteren Umlenkpunkt 18 angeordnet, sodass im Bereich des hinteren Umlenkpunkts 18 eine Öffnung gebildet ist, durch die heißes Brennraumgas von dem unteren Backbereich 1a in den oberen Backbereich 1b strömen kann. Gegebenenfalls ist das Konvektionselement 17 bis zur Trennwand 24 geführt. Wie in allen anderen Ausführungsformen, kann das Konvektionselement 17 eine durchgehende Platte sein, oder aus mehreren, beispielsweise teilweise geöffneten Elementen zusammengesetzt sein. Auch bei dieser, nicht dargestellten Ausführungsform, ist, ähnlich Fig. 6, das heiße Brennraumgas S-förmig durch den Brennraum geleitet, wenn man die Vorrichtung in einem Längsschnitt betrachtet.

Die erfindungsgemäße Vorrichtung, die insbesondere anhand der vorangegangenen Beschreibung und anhand der vorangegangenen Ausführungsformen beschrieben ist, umfasst bevorzugt mehrere als Strahlungsheizvorrichtungen ausgebildete Heizvorrichtungen. Die Strahlung dieser Heizvorrichtungen ist bevorzugt im Wesentlichen senkrecht nach unten gerichtet. Jedoch kann auch eine schräge Ausrichtung der Strahlung dem Erfindungsgedanken entsprechen. Bevorzugt weisen die Strahlungsheizvorrichtungen nach unten, sodass Backraumabfall nicht auf die heiße Fläche fallen kann. Die obere und die untere Transportfläche der Backzangen verlaufen im Wesentlichen waagrecht.

Die heißen Backraumgase sind erfindungsgemäß im Wesentlichen waagrecht oder zumindest teilweise parallel zu den Transportebenen verlaufend geleitet. Dabei ist die Konvektionsströmungsrichtung zumindest schräg verlaufend geleitet, sodass die durchschnittliche Richtung der Konvektionsströmung von einer Heizvorrichtung bis zur Abzugsöffnung von der senkrechten Richtung abweicht. Durch diese zumindest teilweise waagrechte Führung ist der Wärmeübergang zwischen dem heißen Brennraumgas und den Backzangen verbessert.

Gegebenenfalls kann in allen Ausführungsformen der Backraum 1 nur teilweise mit Heizvorrichtungen versehen sein. Dadurch ist zumindest ein Bereich des Backraums 1 bzw. ein Abschnitt der Transportebenen 2a, 2b im Wesentlichen unbeheizt oder nur indirekt beheizt. Der Backraum 1 umfasst dabei eine oder mehrere Heizzonen 31, in denen die Backzangen 3 in den Transportebenen 2a, 2b direkt durch Strahlung der Heizvorrichtungen beheizt werden oder sind. Ferner umfasst der Backraum 1 eine oder mehrere strahlungsheizungsfreie Zone(n) 32 bzw. Backzonen, in denen keine direkte Strahlungsheizung der Backzangen in den Transportebenen 2a, 2b durch die Strahlungsheizvorrichtungen geschieht. In den oder der strahlungsheizungsfreien Zone(n) 32 sind die Backzangen 3 dennoch für einen Backprozess ausreichend temperiert. So weist die Backzange 3 bzw. der Basiskörper 8 der Backzange 3 eine gewisse Wärmespeicherkapazität auf. Diese ist ausreichend, um die Backzange auch entfernt von den Heizvorrichtungen, insbesondere in der strahlungsheizungsfreien Zone 32 auf einer Temperatur zu halten, die zum Backen der Backmischung oder des Teigs ausreichend ist.

Ferner ist durch die Leitung des heißen Backraumgases entlang der Transportebenen 2a, 2b eine konvektive Heizung der Backzangen im gesamten Backraum 1 und insbesondere in der strahlungsheizungsfreien Zone 32 gegeben. Durch diese abschnittsweise direkte Heizung der Backzangen 3 bzw. der Backzangenkette 2 ist die Effizienz weiter verbessert. Die Heizzonen beider Transportebenen 2a, 2b können, wie in Fig. 2 gezeigt, im Bereich des hinteren Umlenkpunkts 18 bzw. knapp davor und knapp danach vorgesehen sein. Die Heizzonen beider Transportebenen 2a, 2b können, wie in Fig. 5 gezeigt, im Backraum, im Bereich der Trennwand 24 vorgesehen sein. Wie in Fig. 6 gezeigt, können auch zwei versetzte Heizbereiche vorgesehen sein. Im unteren Backbereich 1a kann der Heizbereich im Bereich des hinteren Umlenkpunkts 18 oder knapp nach dem hinteren Umlenkpunkt 18 angeordnet sein. Im oberen Backbereich 1b kann die Heizvorrichtung im Backraum 1 in der Nähe der Trennwand 24 vorgesehen sein.

Gegebenenfalls können in allen Ausführungsformen folgende Anordnungen vorgesehen sein: Gegebenenfalls ist die Abzugsöffnung 13 entfernt von dem Heizbereich angeordnet. Gegebenenfalls ist die Abzugsöffnung 13 in einer strahlungsheizungsfreien Zone vorgesehen. Gegebenenfalls ist die Abzugsöffnung 13 in einer strahlungsheizungsfreien Zone des Backraums vorgesehen. Gegebenenfalls ist die Abzugsöffnung 13 an der Oberseite des Backraums vorgesehen, sodass das heiße Brennraumgas durch natürliche Konvektion aufsteigt, um den Backraum zu verlassen.

Gegebenenfalls ist entlang der Konvektionsströmungsrichtung 27 die Heizzone 31 entfernt von der Abzugsöffnung 13 angeordnet. Gegebenenfalls erstreckt sich die Heizzone 31 über eine gewisse Heizlänge entlang des Verlaufs der Backzangenkette 2 und insbesondere entlang der Transportebenen 2a und/oder 2b. Die Heizlänge kann je nach Produkt und Ausführung variieren. Beispielsweise entspricht diese Heizlänge etwa einem Viertel bis zu einer Hälfte der Länge des im Backraum befindlichen Backzangenkettenabschnittes und insbesondere der Transportebenen 2a, 2b. Gegebenenfalls entspricht die Heizlänge etwa einem Drittel der Länge des im Backraum befindlichen Backzangenkettenabschnittes und insbesondere der Transportebenen 2a,2b.

Gegebenenfalls erstreckt sich die strahlungsheizungsfreie Zone 32 über eine gewisse heizfreie Länge entlang des Verlaufs des im Backraum 1 befindlichen Backzangenkettenabschnittes und insbesondere entlang der Transportebenen 2a, 2b. Diese heizfreie Länge kann je nach Produkt und Ausführung variieren. Beispielsweise entspricht diese Länge etwa drei Viertel bis zu einer Hälfte der Länge des im Backraum befindlichen Backzangenkettenabschnittes und insbesondere der Transportebenen 2a,2b. Gegebenenfalls entspricht die Heizlänge etwa zwei Drittel der Länge des im Backraum befindlichen Backzangenkettenabschnittes und insbesondere der Transportebenen 2a, 2b. Gegebenenfalls erstreckt sich die Heizlänge über die gesamte Länge des Backraums 1.

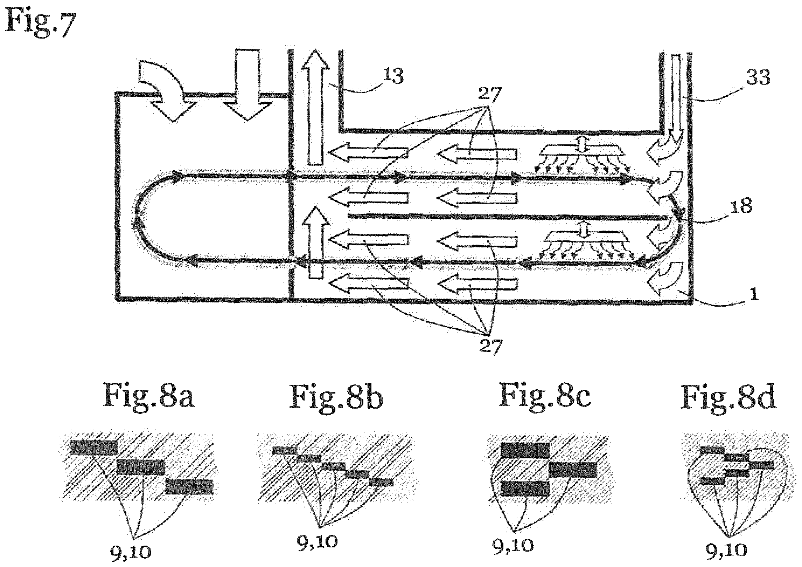

Fig. 7 zeigt eine weitere Möglichkeit der Ausgestaltung des Backofens und insbesondere des Backraums 1. Die Elemente des Backofens der Fig. 7 entsprechen im Wesentlichen den vorangegangenen Elementen und insbesondere dem Backofen gemäß Fig. 2. Zusätzlich ist jedoch eine Eintrittsöffnung 33 vorgesehen. Diese ist bevorzugt am Umlenkpunkt 18 oder im Bereich des hinteren Umlenkpunkts 18 des Backofens vorgesehen. Durch diese Eintrittsöffnung 33 kann beispielsweise Luft oder ein anderes Medium in den Backraum kontrolliert eingebracht werden. Dieses Medium bzw. die Luft wird bevorzugt vorgewärmt, um beispielsweise eine Abkühlung des Backraums zu verhindern. Die Eintrittsöffnung ist insbesondere dafür vorgesehen, dass die Konvektion, durch die das heiße Brennraumgas durch die Abzugsöffnung 13 entweicht, ungehindert erfolgen kann. Insbesondere wird durch das Vorsehen der Eintrittsöffnung 33 und durch das Zuführen des Mediums durch die Eintrittsöffnung 33 die Konvektion verbessert.

Die Fig. 8a, 8b, 8c und 8d zeigen weitere schematische Möglichkeiten der Anordnung der Heizvorrichtungen. Insbesondere können diese entlang des Backraums versetzt oder v-förmig angeordnet sein. Dabei können die oberen Heizvorrichtungen und die unteren Heizvorrichtungen dieselben oder unterschiedliche Ausgestaltungen aufweisen. Auch bei den Ausgestaltungen gemäß Fig. 8a - 8d können zur Beeinflussung der Heizleistung die einzelnen Heizvorrichtungen beispielsweise bewegbar ausgebildet sein. Auch durch die Veränderung des zugeführten Brennstoffmassenstroms kann die Heizleistung einzelner Heizvorrichtungen oder aller Heizvorrichtungen zusammen verändert werden.

### Bezugszeichenliste

- 1.: Backraum
- 1a.: Unterer Backbereich
- 1b.: Oberer Backbereich
- 2.: Backzangenkette
- 2a.: Untere Transportebene
- 2b.: Obere Transportebene
- 3.: Backzange
- 4.: Oberplattenanordnung
- 5.: Unterplattenanordnung
- 6.: Backform
- 7.: Rückenfläche
- 8.: Basiskörper
- 9.: Obere Heizvorrichtung
- 10.: Untere Heizvorrichtung
- 11.: Poröser Körper
- 13.: Abzugsöffnung
- 14.: Zuführungsöffnung
- 15.: Eintrittsöffnung für die Backzangenkette
- 16.: Austrittsöffnung für die Backzangenkette
- 17.: Konvektionselement
- 18.: Hinterer Umlenkpunkt
- 19.: Vorderer Ofenteil
- 20.: Einrichtung zum Aufklappen der Backzangen
- 21.: Ausgabestation
- 22.: Beschickungsstation
- 23.: Einrichtung zum Zuklappen der Backzangen
- 24.: Trennwand
- 25.: Wärmeisolierung
- 26.: Unterseite des Backraums
- 27.: Konvektionsströmungsrichtung
- 28.: Steuerungseinheit
- 29.: Sensor
- 30.: Transportrichtung der Backzangen
- 31.: Heizzone
- 32.: Strahlungsheizungsfreie Zone
- 33.: Eintrittsöffnung

## Patentansprüche

1. Backofen zum Herstellen gebackener, bevorzugt essbarer, Produkte, umfassend:
- einen Backraum (1), mit einem unteren Backbereich (1a) und einem oberhalb des unteren Backbereichs (1a) angeordneten oberen Backbereich (1b),
- eine Backzangenkette (2), die kontinuierlich umlaufend entlang einer oberen Transportebene (2b) durch den oberen Backbereich (1b) und entlang einer unteren Transportebene (2a) durch den unteren Backbereich (1a) bewegt ist, und die auf- und zuklappbare Backzangen (3) enthält,
- wobei die Backzangen (3) je eine Oberplattenanordnung (4) und eine Unterplattenanordnung (5) umfassen, zwischen denen in zugeklappter Stellung eine Backform (6) für die Backprodukte gebildet ist,
- wobei die Oberplattenanordnung (4) und die Unterplattenanordnung (5) jeweils an ihrer der Backform (6) abgewandten Seite eine Rückenfläche (7) aufweisen, die jeweils über einen Wärme leitenden und speichernden Basiskörper (8) mit der Backform verbunden sind,
- wobei die Backzangen (3) beim Übergang von der oberen Transportebene (2b) auf die untere Transportebene (2a) umgedreht werden, sodass die in der oberen Transportebene (2b) oberhalb der Unterplattenanordnung (5) angeordnete Oberplattenanordnung (4) in der unteren Transportebene (2a) unterhalb der Unterplattenanordnung (5) angeordnet ist,
- wobei zumindest eine als Strahlungsheizvorrichtung ausgebildete obere Heizvorrichtung (9) und zumindest eine als Strahlungsheizvorrichtung ausgebildete untere Heizvorrichtung (10) vorgesehen sind, in denen jeweils ein Brenngemisch enthaltend Primärluft und einen Brennstoff verbrannt wird,
- wobei die obere Heizvorrichtung (9) im oberen Backbereich (1b) und oberhalb der oberen Transportebene (2b) angeordnet ist und zur Beheizung der Backform (6) von oben auf die Rückenfläche (7) der Oberplattenanordnung (4) gerichtet ist,
- wobei die untere Heizvorrichtung im unteren Backbereich (1a) zwischen der oberen Transportebene (2b) und der unteren Transportebene (2a) angeordnet ist und zur Beheizung der Backform (6) von oben auf die Rückenfläche (7) der Unterplattenanordnung (5) gerichtet ist,
**dadurch gekennzeichnet,**
- **dass** zur Verbesserung der Konvektionsströmung durch kontrollierte Einbringung von Luft oder rezirkuliertem Brennraumgas in den Backraum eine Eintrittsöffnung (33) zur Zuführung von Luft oder rezirkuliertem Brennraumgas in den Backraum vorgesehen ist, die im Backraum entlang der Konvektionsströmungsrichtung (27) des Backraumgases entfernt von einer Abzugsöffnung (13) vorgesehen ist, wodurch die heißen Backraumgase im Wesentlichen waagrecht oder zumindest teilweise parallel zu den Transportebenen (2a, 2b) verlaufend geleitet sind,
- und **dass** die Fläche der Eintrittsöffnung (33) bevorzugt weniger als zehn Prozent der den Backraum begrenzenden Fläche einnimmt.

2. Backofen nach Anspruch 1, **dadurch gekennzeichnet, dass** die Heizvorrichtungen (9,10) an ihrer Unterseite jeweils einen porösen Körper (11) zum bevorzugt flammenfreien Verbrennen des Brenngemisches darin und/oder an seiner Oberfläche aufweisen.

3. Backofen nach Anspruch 2, **dadurch gekennzeichnet, dass** der poröse Körper ein Metallgewebe, ein Drahtgewebe oder ein Metallgeflecht ist oder enthält.

4. Backofen nach einem der Ansprüche 1 bis 3, **dadurch gekennzeichnet, dass** eine Fördervorrichtung, wie insbesondere ein Gebläse zur Zuführung des Brenngemisches an eine Heizvorrichtung (9,10) vorgesehen ist,
und dass über Steuerung und/oder Regelung der Fördervorrichtung die Heizleistung der Heizvorrichtung (9,10) veränderbar ist,
dass die obere Heizvorrichtung (9) mit einer oberen Fördervorrichtung und die untere Heizvorrichtung (10) mit einer unteren Fördervorrichtung verbunden ist, sodass die Heizleistungen der oberen Heizvorrichtung (9) und der unteren Heizvorrichtung (10) getrennt voneinander veränderbar, insbesondere getrennt steuerbar oder getrennt regelbar sind.

5. Backofen nach einem der Ansprüche 1 bis 4, **dadurch gekennzeichnet, dass** der Backraum mit Ausnahme folgender Öffnungen im Wesentlichen geschlossen ausgebildet ist:
- eine Abzugsöffnung (13) zur Ableitung der Verbrennungsgase aus dem Backraum
- eine oder mehrere Zuführungsöffnungen für das Brenngemisch, insbesondere für den Primärluft und den Brennstoff,
- eine Eintrittsöffnung (15) für die Backzangenkette und
- eine Austrittsöffnung (16) für die Backzangenkette,
- gegebenenfalls eine Eintrittsöffnung (33) zur Verbesserung der Konvektionsströmung durch Zuführung von Luft oder rezirkuliertem Brennraumgas in den Backraum (1),
sodass Umgebungsluft, insbesondere Sekundärluft nicht oder nur in geringer Menge in den Backraum (1) gelangt.

6. Backofen nach einem der Ansprüche 1 bis 5, **dadurch gekennzeichnet, dass** zwischen dem unteren Backbereich (1a) und dem oberen Backbereich (1b) ein Konvektionsleitelement (17) zum Ablenken von heißem, aufsteigenden Backraumgas des unteren Backbereichs (1a) in horizontaler Richtung und streckenweises Leiten desselben durch den Backraum (1) vorgesehen ist.

7. Backofen nach Anspruch 6, **dadurch gekennzeichnet, dass** das Konvektionsleitelement (17) als Anordnung mehrerer schräggestellter Lamellen ausgebildet ist, deren Lamellen sich zwischen dem unteren Backbereich (1a) und dem oberen Backbereich (1b) quer zur Laufrichtung der Backzangenkette durch den Backraum erstrecken,
oder dass das Konvektionsleitelement(17) als horizontal verlaufender Plattenkörper ausgebildet ist, der sich zwischen dem unteren Backbereich (1a) und dem oberen Backbereich (1b) durch den Backraum erstreckt, wobei der Plattenkörper gegebenenfalls Öffnungen aufweist.

8. Backofen nach einem der Ansprüche 1 bis 7, **dadurch gekennzeichnet, dass** mehrere obere Heizvorrichtungen (9) und/oder mehrere untere Heizvorrichtungen (10) vorgesehen sind,
und dass die Heizleistungen der oberen Heizvorrichtungen (9) und der unteren Heizvorrichtungen (10) getrennt voneinander veränderbar, insbesondere getrennt steuerbar oder getrennt regelbar sind,
oder dass die Heizleistungen zweier oberer Heizvorrichtungen (9) getrennt voneinander veränderbar, insbesondere getrennt steuerbar oder getrennt regelbar sind,
oder dass die Heizleistungen zweier unterer Heizvorrichtungen (10) getrennt voneinander veränderbar, insbesondere getrennt steuerbar oder getrennt regelbar sind.

9. Backofen nach einem der Ansprüche 1 bis 8, **dadurch gekennzeichnet, dass** zum Leiten des heißen aufsteigenden Backraumgases in horizontaler Richtung durch den Backraum (1) vor Austritt durch die Abzugsöffnung (13) die Abzugsöffnung (13) entlang der Konvektionsströmungsrichtung (27) des Backraumgases entfernt von den Heizvorrichtungen (9,10) angeordnet ist.

10. Backofen nach einem der Ansprüche 1 bis 9, **dadurch gekennzeichnet, dass** eine obere Heizvorrichtung und eine untere Heizvorrichtung im Bereich des hinteren Umlenkpunktes (18) der Backzangenkette (2) und/oder unmittelbar vor und nach dem hinteren Umlenkpunkt (18) der Backzangenkette (2) vorgesehen sind, und dass die Abzugsöffnung (13) entlang der Konvektionsströmungsrichtung (27) des Backraumgases entfernt von den Heizvorrichtungen (9,10), bevorzugt in der Nähe der Trennwand (24), angeordnet ist.

11. Backofen nach einem der Ansprüche 1 bis 10, **dadurch gekennzeichnet, dass** ein vorderer Ofenteil (19) vorgesehen ist, in dem die Backzangen (3) von der unteren Transportebene (2a) in die obere Transportebene (2b) geführt und umgelenkt sind,
dass im vorderen Ofenteil (19) insbesondere entlang der oberen Transportebene (2b), eine Einrichtung (20) zum Aufklappen der Backzangen (3), eine Ausgabestation (21), eine Beschickungsstation (22) und eine Einrichtung (23) zum Zuklappen der Backzangen (3) in Laufrichtung der Backzangen (3) hintereinander angeordnet sind, und dass der vordere Ofenteil (19) durch eine Trennwand (24) von dem Backraum (1) abgetrennt ist, wobei in der Trennwand (24) eine Eintrittsöffnung (15) für die Backzangenkette und eine Austrittsöffnung (16) für die Backzangenkette vorgesehen sind.

12. Backofen nach einem der Ansprüche 1 bis 11, **dadurch gekennzeichnet, dass** die Wände des Backraums (1) vollständig oder teilweise mit einer Wärmeisolierung (25) versehen sind.

13. Backofen nach einem der Ansprüche 1 bis 12, **dadurch gekennzeichnet, dass** der Backraum (1) an seiner Unterseite (26) geschlossen ist und an seiner Unterseite mit einer Wärmeisolierung versehen ist, und dass der Backraum (1) gegebenenfalls an der Unterseite eine Öffnung aufweist, wobei diese Öffnung bevorzugt weniger als zehn Prozent der Fläche der geschlossenen Unterseite des Backraums einnimmt.

14. Backofen nach einem der Ansprüche 1 bis 13, **dadurch gekennzeichnet, dass** der Backraum (1) eine Heizzone (31) umfasst, in der zumindest eine Heizvorrichtung (9, 10) zur Beheizung der Backzangen (3) durch direkte Einwirkung der Wärmestrahlung der Heizvorrichtung (9, 10) vorgesehen ist.

15. Backofen nach einem der Ansprüche 1 bis 14, **dadurch gekennzeichnet, dass** der Backraum (1) eine strahlungsheizungsfreie Zone (32) umfasst, in der zur Beheizung der Backzangen (3) durch Einwirkung der Konvektionswärme des in Konvektionsströmungsrichtung (27) bewegten heißen Brennraumgases entlang der oberen Transportebene (2b) und/oder entlang der unteren Transportebene (2a) keine direkte Beheizung der Backzangen (3) durch die Strahlung der Heizvorrichtung vorgesehen ist.

16. Backofen nach einem der Ansprüche 1 bis 15, **dadurch gekennzeichnet, dass** die Abzugsöffnung (13) in einer strahlungsheizungsfreien Zone (32) des Backraums vorgesehen ist.

17. Backofen nach einem der Ansprüche 1 bis 16, **dadurch gekennzeichnet, dass** ein Sensor (29) zur Regelung der Heizvorrichtung, insbesondere zur Regelung der Heizleistung der Heizvorrichtung vorgesehen ist, der bevorzugt als berührungsloser Temperatursensor ausgebildet ist.

18. Backofen nach einem der Ansprüche 1 bis 17, **dadurch gekennzeichnet, dass** zur Verbesserung der Konvektionsströmung durch kontrollierte Einbringung von bevorzugt zur Verhinderung einer Abkühlung des Backraumes vorgewärmter Luft oder rezirkuliertem Brennraumgas in den Backraum eine Eintrittsöffnung (33) zur Zuführung von Luft oder rezirkuliertem Brennraumgas in den Backraum vorgesehen ist, die insbesondere im Backraum entlang der Konvektionsströmungsrichtung (27) des Backraumgases entfernt von der Abzugsöffnung (13) vorgesehen ist und im Bereich des hinteren Umlenkpunkts (18) des Backofens vorgesehen ist, wobei die Fläche der Eintrittsöffnung (33) bevorzugt weniger als zehn Prozent der den Backraum begrenzenden Fläche einnimmt.

## Claims

1. A baking oven for producing baked, preferably edible, products, comprising:
- a baking chamber (1) with a lower baking area (1a) and an upper baking area (1b), which is arranged above the lower baking area (1a),
- a baking tong chain (2), which is moved in a continuously circulating manner along an upper transport plane (2b) through the upper baking area (1b) and along a lower transport plane (2a) through the lower baking area (1a), and which includes the baking tongs (3), which can be folded open and closed,
- wherein the baking tongs (3) each comprise an upper plate arrangement (4) and a lower plate arrangement (5), between which a baking mold (6) for the bakery products is formed in the closed position,
- wherein the upper plate arrangement (4) and the lower plate arrangement (5) each have a back surface (7) on the side facing away from the baking mold (6), which are each connected to the baking mold via a heat-conducting and heat-storing base body (8),
- wherein the baking tongs (3) are turned over during the transition from the upper transport plane (2b) to the lower transport plane (2a) so that the upper plate arrangement (4) arranged above the lower plate arrangement (5) in the upper transport plane (2b) is arranged below the lower plate arrangement (5) in the lower transport plane (2a),
- wherein at least one upper heating device (9) designed as a radiant heating device and at least one lower heating device (10) designed as a radiant heating device are provided, in each of which a fuel mixture containing primary air and a fuel is burnt,
- wherein the upper heating device (9) is arranged in the upper baking area (1b) and above the upper transport plane (2b) and is directed from above at the back surface (7) of the upper plate arrangement (4) for heating the baking mold (6),
- wherein the lower heating device is arranged in the lower baking area (1a) between the upper transport plane (2b) and the lower transport plane (2a) and is directed from above at the back surface (7) of the lower plate arrangement (5) for heating the baking mold (6),
**characterized in that**
- for improving the convection flow through the controlled supply of air or recirculated baking chamber gas into the baking chamber, an entry opening (33) is provided for supplying air or recirculated baking chamber gas into the baking chamber, which is provided in the baking chamber along the convection flow direction (27) of the baking chamber gas at a distance from a vent opening (13), so that the hot baking chamber gases are guided in a substantially horizontal or at least partially parallel manner to the transport planes (2a, 2b),
- and **in that** the area of the entry opening (33) preferably occupies less than ten percent of the area delimiting the baking chamber.

2. The baking oven according to claim 1, **characterized in that** the heating devices (9, 10) each have a porous body (11) on their bottom for burning the combustion mixture therein and/or on its surface in a preferably flame-free manner.

3. The baking oven according to claim 2, **characterized in that** the porous body is or contains a metal mesh, a wire mesh or a metal braiding.

4. The baking oven according to one of claims 1 to 3, **characterized in that** a conveying device, such as in particular a fan, is provided to supply the combustion mixture to a heating device (9, 10),
and **in that** the heating output of the heating device (9, 10) is variable by controlling and/or regulating the conveying device,
**in that** the upper heating device (9) is connected to an upper conveying device and the lower heating device (10) is connected to a lower conveying device, so that the heating outputs of the upper heating device (9) and the lower heating device (10) can be varied separately, in particular controlled separately or regulated separately.

5. The baking oven according to one of claims 1 to 4, **characterized in that** the design of the baking chamber is substantially closed, except for the following openings:
- a vent opening (13) for discharging the combustion gases from the baking chamber
- one or more supply openings for the combustion mixture, in particular for the primary air and the fuel,
- an entry opening (15) for the baking tong chain and
- an exit opening (16) for the baking tong chain,
- optionally an entry opening (33) for improving the convection flow by supplying air or recirculated combustion chamber gas into the baking chamber (1) so that no or only very little ambient air, in particular secondary air, enters the baking chamber (1).

6. The baking oven according to one of claims 1 to 5, **characterized in that** a convection guiding element (17) for deflecting hot, ascending baking chamber gas of the lower baking area (1a) in the horizontal direction and for partially guiding the same through the baking chamber (1) is provided between the lower baking area (1a) and the upper baking area (1b).

7. The baking oven according to claim 6, **characterized in that** the convection guiding element (17) is designed as an arrangement of multiple inclined lamellae, the lamellae of which extend between the lower baking area (1a) and the upper baking area (1b) transversely to the running direction of the baking tong chain through the baking chamber, or **in that** the convection guiding element (17) is designed as horizontally extending plate body, which extends between the lower baking area (1a) and the upper baking area (1b) through the baking chamber, wherein the plate body may have openings.

8. The baking oven according to one of claims 1 to 7, **characterized in that** a plurality of upper heating devices (9) and/or a plurality of lower heating devices (10) are provided, and **in that** the heating outputs of the upper heating devices (9) and the lower heating devices (10) can be varied separately, in particular controlled separately or regulated separately,
or **in that** the heating outputs of two upper heating devices (9) can be varied separately, in particular controlled separately or regulated separately,
or **in that** the heating outputs of two lower heating devices (10) can be varied separately, in particular controlled separately or regulated separately.

9. The baking oven according to one of claims 1 to 8, **characterized in that** the vent opening (13) is arranged along the convection flow direction (27) of the baking chamber gas at a distance from the heating devices (9, 10) for guiding the hot ascending baking chamber gas in the horizontal direction through the baking chamber (1) before exiting through the vent opening (13).

10. The baking oven according to one of claims 1 to 9, **characterized in that** an upper heating device and a lower heating device are provided in the area of the rear deflection point (18) of the baking tong chain (2) and/or immediately upstream and downstream of the rear deflection point (18) of the baking tong chain and **in that** the vent opening (13) is arranged along the convection flow direction (27) of the baking chamber gas at a distance from the heating devices (9, 10), preferably near the dividing wall (24).

11. The baking oven according to one of claims 1 to 10, **characterized in that** a front part (19) of the oven is provided, in which the baking tongs (3) are guided and deflected from the lower transport plane (2a) to the upper transport plane (2b),
**in that** an arrangement (20) for opening the baking tongs (3), an output station (21), a filling station (22) and an arrangement (23) for closing the baking tongs (3) are arranged in the running direction of the baking tongs (3) one after the other in the front part (19) of the oven, in particular along the transport plane (2b), and **in that** the front part (19) of the oven is separated from the baking chamber (1) by a dividing wall (24), wherein an entry opening (15) for the baking tong chain and an exit opening (16) for the baking tong chain are provided in the dividing wall (24).

12. The baking oven according to one of claims 1 to 11, **characterized in that** the walls of the baking chamber (1) are entirely or partially provided with thermal insulation (25).

13. The baking oven according to one of claims 1 to 12, **characterized in that** the baking chamber (1) has a closed bottom (26) and is provided with thermal insulation on its bottom, and **in that** the baking chamber (1) optionally has an opening in the bottom, this opening preferably occupying less than 10 percent of the area of the closed bottom of the baking chamber.

14. The baking oven according to one of claims 1 to 13, **characterized in that** the baking chamber (1) comprises a heating zone (31), in which at least one heating device (9, 10) is provided for heating the baking tongs (3) by direct exposure to the thermal radiation of the heating device (9, 10).

15. The baking oven according to one of claims 1 to 14, **characterized in that** the baking chamber (1) comprises a zone (32) free of radiant heating, in which no direct heating of the baking tongs (3) by the radiation of the heating device is provided for heating the baking tongs (3) by the exposure to the convective heat of the hot combustion chamber gas moved in the convection flow direction (27) along the upper transport plane (2b) and/or along the lower transport plane (2a).

16. The baking oven according to one of claims 1 to 15, **characterized in that** the vent (13) is provided in a zone (32) free of radiant heating of the baking chamber.

17. The baking oven according to one of claims 1 to 16, **characterized in that** a sensor (29) for controlling the heating device, in particular for controlling the heating output of the heating device, is provided, which is preferably configured as a contactless temperature sensor.

18. The baking oven according to one of claims 1 to 17, **characterized in that**, for improving the convection flow by the controlled supply of air, which is preferably preheated for preventing the baking chamber from cooling down, or recirculated baking chamber gas into the baking chamber, an entry opening (33) is provided for supplying air or recirculated baking chamber gas into the baking chamber, which is in particular provided in the baking chamber along the convection flow direction (27) of the baking chamber gas at a distance from the vent opening (13) and in the area of the rear deflection point (18) of the baking oven, wherein the area of the entry opening (33) occupies preferably less than ten percent of the area delimiting the baking chamber.

## Revendications

1. Four de cuisson pour la production de produits cuits, de préférence comestibles, comprenant :
- une chambre de cuisson (1) avec une zone de cuisson inférieure (1a) et une zone de cuisson supérieure (1b) disposée au-dessus de la zone de cuisson inférieure (1a),
- une chaîne de pinces de cuisson (2) qui est déplacée en continu et de manière circulaire le long d'un plan de transport supérieur (2b) à travers la zone de cuisson supérieure (1b) et le long d'un plan de transport inférieur (2a) à travers la zone de cuisson inférieure (1a) et qui comprend des pinces de cuisson (3) qui peuvent être ouvertes et fermées,
- dans lequel les pinces de cuisson (3) comprennent chacune un agencement de plaques supérieures (4) et un agencement de plaques inférieures (5), entre lesquels, en position fermée, un moule de cuisson (6) pour les produits cuits est formé,
- dans lequel l'agencement de plaques supérieures (4) et l'agencement de plaques inférieures (5) présentent chacun une surface arrière (7) sur leur côté opposé au moule de cuisson (6), qui sont chacune reliées au moule de cuisson par l'intermédiaire d'un corps de base (8) conducteur et accumulateur de chaleur,
- dans lequel les pinces de cuisson (3) sont inversées lors du passage du plan de transport supérieur (2b) au plan de transport inférieur (2a), de sorte que l'agencement de plaques supérieures (4) disposé dans le plan de transport supérieur (2b) au-dessus de l'agencement de plaques inférieures (5) est disposé dans le plan de transport inférieur (2a) en dessous de l'agencement de plaques inférieures (5),
- dans lequel au moins un dispositif de chauffage supérieur (9) conçu comme un dispositif de chauffage par rayonnement et au moins un dispositif de chauffage inférieur (10) conçu comme un dispositif de chauffage par rayonnement sont prévus, dans chacun desquels un mélange combustible contenant de l'air primaire et un combustible est brûlé,
- dans lequel le dispositif de chauffage supérieur (9) est disposé dans la zone de cuisson supérieure (1b) et au-dessus du plan de transport supérieur (2b) et est dirigé depuis le haut sur la surface arrière (7) de l'agencement de plaques supérieures (4) pour chauffer le moule de cuisson (6),
- dans lequel le dispositif de chauffage inférieur est disposé dans la zone de cuisson inférieure (1a) entre le plan de transport supérieur (2b) et le plan de transport inférieur (2a) et est dirigé depuis le haut sur la surface arrière (7) de l'agencement de plaques inférieures (5) pour chauffer le moule de cuisson (6),
**caractérisé**
- **en ce que**, pour améliorer le courant de convection par une introduction contrôlée d'air ou de gaz de chambre de combustion recyclé dans la chambre de cuisson, il est prévu un orifice d'entrée (33) pour alimenter en air ou en gaz de chambre de combustion recyclé la chambre de cuisson, qui est prévu dans la chambre de cuisson le long de la direction du courant de convection (27) du gaz de chambre de cuisson à distance d'un orifice de sortie (13), ce qui fait que le gaz de la chambre de cuisson chaud est dirigé sensiblement horizontalement ou au moins partiellement parallèlement aux plans de transport (2a, 2b),
- et **en ce que** la surface de l'orifice d'entrée (33) occupe de préférence moins de dix pour cent de la surface délimitant la chambre de cuisson.

2. Four de cuisson selon la revendication 1, **caractérisé en ce que** les dispositifs de chauffage (9, 10) présentent chacun sur leur face inférieure un corps poreux (11) pour la combustion de préférence sans flamme du mélange combustible dans celui-ci et/ou sur sa surface.

3. Four de cuisson selon la revendication 2, **caractérisé en ce que** le corps poreux est ou comprend un tissu à mailles métalliques, un tissu de fil métallique ou un treillis métallique.

4. Four de cuisson selon l'une des revendications 1 à 3, **caractérisé en ce qu'**un dispositif de transport, tel qu'en particulier une soufflante, est prévu pour alimenter le mélange combustible à un dispositif de chauffage (9, 10),
et **en ce que** la puissance de chauffage du dispositif de chauffage (9, 10) peut être modifiée par commande et/ou régulation du dispositif de transport,
**en ce que** le dispositif de chauffage supérieur (9) est relié à un dispositif de transport supérieur et le dispositif de chauffage inférieur (10) est relié à un dispositif de transport inférieur, de sorte que les puissances de chauffage du dispositif de chauffage supérieur (9) et du dispositif de chauffage inférieur (10) peuvent être modifiées séparément l'une de l'autre, en particulier commandées séparément ou réglées séparément.

5. Four de cuisson selon l'une des revendications 1 à 4, **caractérisé en ce que** la chambre de cuisson est réalisée essentiellement fermée à l'exception des orifices suivants :
- un orifice d'échappement (13) pour évacuer les gaz de combustion de la chambre de cuisson,
- un ou plusieurs orifices d'alimentation pour le mélange combustible, en particulier pour l'air primaire et le combustible,
- un orifice d'entrée (15) pour la chaîne de pinces de cuisson, et
- un orifice de sortie (16) pour la chaîne de pinces de cuisson,
- éventuellement un orifice d'entrée (33) pour améliorer le courant de convection en amenant de l'air ou du gaz de combustion recyclé dans la chambre de cuisson (1),
de sorte que l'air ambiant, en particulier l'air secondaire, ne pénètre pas dans la chambre de cuisson (1) ou seulement en faible quantité.

6. Four de cuisson selon l'une des revendications 1 à 5, **caractérisé en ce qu'**un élément de guidage de convection (17) est prévu entre la zone de cuisson inférieure (1a) et la zone de cuisson supérieure (1b) pour dévier en direction horizontale le gaz de la chambre de cuisson chaud et ascendant de la zone de cuisson inférieure (1a) et le guider par sections à travers la chambre de cuisson (1).

7. Four de cuisson selon la revendication 6, **caractérisé en ce que** l'élément de guidage de convection (17) est conçu comme un agencement de plusieurs lamelles inclinées, dont les lamelles s'étendent à travers la chambre de cuisson entre la zone de cuisson inférieure (1a) et la zone de cuisson supérieure (1b) transversalement au sens machine de la chaîne de pinces de cuisson,
ou **en ce que** l'élément de guidage de convection (17) est conçu comme un corps plat s'étendant horizontalement qui s'étend à travers la chambre de cuisson entre la zone de cuisson inférieure (1a) et la zone de cuisson supérieure (1b), le corps plat présentant des orifices, le cas échéant.

8. Four de cuisson selon l'une des revendications 1 à 7, **caractérisé en ce que** plusieurs dispositifs de chauffage supérieurs (9) et/ou plusieurs dispositifs de chauffage inférieurs (10) sont prévus,
et **en ce que** les puissances de chauffage des dispositifs de chauffage supérieurs (9) et des dispositifs de chauffage inférieurs (10) peuvent être modifiées séparément les unes des autres, en particulier commandées séparément ou réglées séparément,
ou **en ce que** les puissances de chauffage de deux dispositifs de chauffage supérieurs (9) peuvent être modifiées séparément les unes des autres, en particulier commandées séparément ou réglées séparément,
ou **en ce que** les puissances de chauffage de deux dispositifs de chauffage inférieurs (10) peuvent être modifiées séparément les unes des autres, en particulier commandées séparément ou réglées séparément.

9. Four de cuisson selon l'une des revendications 1 à 8, **caractérisé en ce que**, pour guider le gaz de la chambre de cuisson chaud ascendant dans une direction horizontale à travers la chambre de cuisson (1) avant qu'il ne sorte par l'orifice d'échappement (13), l'orifice d'échappement (13) est disposé le long de la direction du courant de convection (27) du gaz de la chambre de cuisson à distance des dispositifs de chauffage (9, 10).

10. Four de cuisson selon l'une des revendications 1 à 9, **caractérisé en ce qu'**un dispositif de chauffage supérieur et un dispositif de chauffage inférieur sont prévus dans la zone du point de renvoi arrière (18) de la chaîne de pinces de cuisson (2) et/ou immédiatement en amont et en aval du point de renvoi arrière (18) de la chaîne de pinces de cuisson (2), et **en ce que** l'orifice d'échappement (13) est disposé le long de la direction du courant de convection (27) du gaz de la chambre de cuisson à distance des dispositifs de chauffage (9, 10), de préférence à proximité de la paroi de séparation (24).

11. Four de cuisson selon l'une des revendications 1 à 10, **caractérisé en ce qu'**il est prévu une partie avant (19) du four, dans laquelle les pinces de cuisson (3) sont guidées et déviées du plan de transport inférieur (2a) dans le plan de transport supérieur (2b),
**en ce que**, dans la partie avant (19) du four, en particulier le long du plan de transport supérieur (2b), un dispositif (20) pour ouvrir les pinces de cuisson (3), une station de décharge (21), une station de chargement (22) et un dispositif (23) pour fermer les pinces de cuisson (3) sont disposés les uns derrière les autres dans le sens machine des pinces de cuisson (3), et **en ce que** la partie avant (19) du four est séparée de la chambre de cuisson (1) par une paroi de séparation (24), un orifice d'entrée (15) pour la chaîne de pinces de cuisson et un orifice de sortie (16) pour la chaîne de pinces de cuisson étant prévus dans la paroi de séparation (24).

12. Four de cuisson selon l'une des revendications 1 à 11, **caractérisé en ce que** les parois de la chambre de cuisson (1) sont entièrement ou partiellement pourvues d'une isolation thermique (25).

13. Four de cuisson selon l'une des revendications 1 à 12, **caractérisé en ce que** la chambre de cuisson (1) est fermée sur sa face inférieure (26) et est pourvue d'une isolation thermique sur sa face inférieure, et **en ce que** la chambre de cuisson (1) présente éventuellement un orifice sur la face inférieure, cet orifice occupant de préférence moins de dix pour cent de la surface de la face inférieure fermée de la chambre de cuisson.

14. Four de cuisson selon l'une des revendications 1 à 13, **caractérisé en ce que** la chambre de cuisson (1) comprend une zone de chauffage (31) dans laquelle est prévu au moins un dispositif de chauffage (9, 10) pour chauffer les pinces de cuisson (3) par action directe du rayonnement thermique du dispositif de chauffage (9, 10).

15. Four de cuisson selon l'une des revendications 1 à 14, **caractérisé en ce que** la chambre de cuisson (1) comprend une zone (32) exempte de chauffage par rayonnement, dans laquelle il n'est pas prévu de chauffage direct des pinces de cuisson (3) par le rayonnement du dispositif de chauffage pour chauffer les pinces de cuisson (3) par action de la chaleur de convection du gaz de la chambre de combustion chaud déplacé dans la direction du courant de convection (27) le long du plan de transport supérieur (2b) et/ou le long du plan de transport inférieur (2a).

16. Four de cuisson selon l'une des revendications 1 à 15, **caractérisé en ce que** l'orifice d'échappement (13) est prévu dans une zone (32) de la chambre de cuisson exempte de chauffage par rayonnement.

17. Four de cuisson selon l'une des revendications 1 à 16, **caractérisé en ce qu'**il est prévu un capteur (29) pour la commande du dispositif de chauffage, en particulier pour la commande de la puissance de chauffage du dispositif de chauffage, qui est de préférence conçu comme un capteur de température sans contact.

18. Four de cuisson selon l'une des revendications 1 à 17, **caractérisé en ce que**, pour améliorer le courant de convection par l'introduction contrôlée dans la chambre de cuisson d'air qui est de préférence préchauffé pour empêcher le refroidissement de la chambre de cuisson ou de gaz de chambre de combustion recyclé, un orifice d'entrée (33) est prévu pour alimenter en air ou en gaz de chambre de combustion recyclé la chambre de cuisson, qui est prévu en particulier dans la chambre de cuisson le long de la direction du courant de convection (27) du gaz de la chambre de cuisson, à distance de l'orifice de sortie (13), et qui est prévu dans la zone du point de renvoi arrière (18) du four de cuisson, la surface de l'orifice d'entrée (33) occupant de préférence moins de dix pour cent de la surface délimitant la chambre de cuisson.
